(19) **Europäisches Patentamt / European Patent Office / Office européen des brevets**

(11) **EP 4 493 773 B1**

(12) # EUROPEAN PATENT SPECIFICATION

(45) Date of publication and mention
of the grant of the patent:
**25.03.2026 Bulletin 2026/13**

(21) Application number: **23712199.1**

(22) Date of filing: **15.03.2023**

(51) International Patent Classification (IPC):
**E04B 9/12** *(2006.01)*

(52) Cooperative Patent Classification (CPC):
**E04B 9/122**

(86) International application number:
**PCT/EP2023/056631**

(87) International publication number:
**WO 2023/175017 (21.09.2023 Gazette 2023/38)**

(54) **PROFILE SYSTEM FOR A CONSTRUCTION STRUCTURE AND INSTALLATION PROCEDURE**

PROFILSYSTEM FÜR EIN BAUWERK UND MONTAGEVERFAHREN

SYSTÈME DE PROFIL POUR UNE STRUCTURE DE CONSTRUCTION ET PROCÉDURE D'INSTALLATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **17.03.2022 ES 202230223**

(43) Date of publication of application:
**22.01.2025 Bulletin 2025/04**

(73) Proprietor: **Pladur Gypsum, S.A.U.**
**28343 Madrid (ES)**

(72) Inventor: **ZAMORA LOUREIRO, Enrique Juan**
**28343 Madrid (ES)**

(74) Representative: **Clarke, Modet y Cía., S.L.**
**C/ Suero de Quiñones 34-36**
**28002 Madrid (ES)**

(56) References cited:
**EP-A1- 1 134 329      EP-A1- 3 456 987**
**US-A- 4 866 900**

## Description

## Field of invention

The present invention is related to the construction sector and more specifically in construction profiles for the construction of suspended roof structures, walls and facade enclosures.

## Background of the invention

Obtaining construction structures, both horizontal such as suspended roofs and vertical such as walls or facade enclosures using plasterboard or, in general, any other type of flat construction products, is carried out by means of an auxiliary structure that, in many cases, it is a structure made with metal profiles, generally rolled steel profiles.

EP1134329A1 describes a similar profile system according to the prior art.

In accordance with applicable construction regulations, the deformation of these auxiliary structures when the partitions, roofs and enclosures are installed and in use are limited. The functional loads to which these components are subjected are their own weight, the use loads of the partition, roof or facade enclosure, and the environmental stresses that they can withstand, such as wind forces, etc.

Therefore, in their state of use and subjected to the maximum expected stresses, the components used in the structures must not exceed the maximum deformation that is set, depending on the type of roof, partition or facade enclosure and the use given to it. Additionally, these elements, after being subjected to these stresses, must recover their original state, devoid of deformation.

When the functional loads supported by these components are large or when the distance between the fixing points of said components to the structural elements of the building is large, mixed auxiliary structures are usually used. In general, a mixed auxiliary structure requires:

- A first structure: the function of this structure, called the primary structure, is to support and transmit the loads to the fixing points of the auxiliary structure to the structural elements of the building.
- A second structure. This second structure, called the secondary structure, is the one to which the plasterboards are fixed and distributed, at its junction points to the primary structure, the loads supported by said plasterboards or flat product of construction.

The primary and secondary structures are usually each formed by parallel profiles. The primary profiles are separated from each other by a certain distance, called primary modulation (L). In the same way, the secondary profiles are separated from each other by a certain distance, called secondary modulation (S). The profiles that form the primary structure are usually perpendicular to the profiles that form the secondary structure.

Therefore, the efficiency of a construction structure can be measured by the following parameters:

- Flatness of the flat element once said element is subjected to normal work load.
- Less number of fixing points (hangs) to the structural elements of the construction. This parameter is measured in number of fixing points per square meter of roof.

In turn, the smallest number of fixing points is determined by:

- Greater separation distance between the fixing points to the structure in the direction of the primary structure. This parameter is measured as the distance in meters between fixing points, according to the direction of the primary profiles.
- Greater separation between the profiles of the primary structure (greater primary modulation). This parameter is measured as the distance in meters between primary profiles, according to the perpendicular direction to them.

The profiles of the primary structure are usually at a different level from the profiles of the secondary structure, so that the profiles of one of the structures do not interfere with the profiles of the other. However, on other occasions, such as in ph45 plasterboard structures, there is interference and a weakening of one of the structures, generating a high cost and less efficient system.

Generally, when mixed structures are used, the construction flat products are installed by means of screws fixing these only to the profiles of the secondary structure.

The rigid joint of the metal profile that forms the secondary structure with the flat product that is part of the partition, roof or facade enclosure allows both to collaborate mechanically and increases the rigidity of the set, allowing greater useful spans between the support points of the profiles for the same maximum deformation of the partition, roof or enclosure.

The joint between primary profiles and secondary profiles is usually made by joint pieces between profiles. When this joint is made with joint pieces, a large number of said pieces is required. Therefore, the use of this large number of parts translates into an increase in the time and difficulty of installing the construction structure, which translates into an increase in the installation cost.

The joint of the secondary profiles to the primary profiles is usually focused on preventing their separation in the perpendicular direction to the fixing plane of the flat element and does not generally prevent, once fixed, the secondary profiles from moving with respect to the primary profiles in some of the other dimensions of space. The process of adjusting the separation between profiles is carried out in this case, profile by profile, during the installation and fixing of the flat product.

In some cases, the profiles of the primary structure have an element with perforations that facilitate the fixing of the secondary profiles to the profiles of the primary structure. These perforations also allow predefining the separation between auxiliary profiles (secondary modulation - S).

When the perforations are made in areas of the primary profile that are far from its neutral fiber, or even completely affecting one of its wings, the primary profiles are considerably weakened, reducing their moment of inertia and their load capacity. For example, in a 45/48/45 C-shaped profile, the moment of inertia can be reduced by up to one seventh when the perforation completely affects one of its wings.

A particular case of mixed construction structures is when the lower part of the profiles of both structures, primary and secondary, are at the same level and coincide with the face of the flat product that forms the partition, roof or enclosure. In mixed structures at the same level, the profiles of the primary structure interfere with the profiles of the secondary structure.

When the bottom of the profiles of the primary and secondary structure are at the same level, the flat product can be fixed to both the profiles of the primary structure and the profiles of the secondary structure, improving the mechanical behavior of both profiles and increasing the useful spans between the support points of the profiles for the same maximum deformation of the roof, partition or enclosure. The best mechanical behavior also allows less deformation of the partition, roof or enclosure to be obtained with equal useful spans.

Support joining systems for roofs and walls are known in the state of the art, such as the one described in patent US4208851A, where a fire-resistant suspended roof system is described in which the main beams have weakened joints that bend with the thermal expansion. The roof support system has fixed, aligned beam elements butted together to absorb longitudinal compression, such as resulting from thermal expansion during a fire.

Each band end includes an axially outwardly extending tab for locking engagement with the adjacent beam element band and is configured such that the tabs fold longitudinally and turn laterally. Displaced out of the normal plane of the tabs when the beam elements are longitudinally compressed towards each other. Accordingly, the bead is displaced laterally as they move toward each other in a longitudinal direction and may actually overlap each other longitudinally.

The cross beams are generally connected to the main beams passage slots in the main beams, such as by a hook on a connector, as described in patents ES2240586T3 and ES2056916T3.

Another example is patent EP1724407B1, which refers to a metal grid structure for a suspended roof, and more particularly to a connector in such a structure that helps keep the roof intact and without falling under its own weight during a fire.

On the other hand, the placement of structures in two perpendicular directions is especially interesting in the particular case of roofs, but it is also applicable to vertical structures, such as covering walls, making high-rise partitions or making light enclosures of facades. In addition, in the particular case of facade enclosure, due to the strong wind loads they support, fire resistance factors or burglary resistance factors; the mixed structures at the same level are especially interesting when it comes to their design.

In all the above cases, the maintenance of the inertia of the profiles of the primary structure must be guaranteed along the entire length of the profile to avoid oversizing it. At the same time, the mechanical dimensioning of the primary profiles, to support the required structural loads, makes their dimensions significant and therefore it is not justified to place many of them in parallel and with small separation distances.

In order to allow the primary profiles that support the functional loads to be separated from each other up to, for example, 1,200 mm gaps, it is necessary to reinforce the plasterboard or flat product by means of an auxiliary structure of lighter secondary profiles, in the perpendicular direction to the primary profiles. In this case, both structures are in the same plane and joined together.

In these cases, the primary profiles placed in one of the directions provide the structural rigidity of the system, while the secondary profiles, oriented in the other direction, provide a better fixation of the plasterboard, and provide greater rigidity of the plates to allow the primary profiles to be further apart from each other.

The mechanical resistance of a profile is provided by its moment of inertia. In the case of roofs or walls with large surfaces, both the structural profiles and the auxiliary profiles must give continuity to their moment of inertia, avoiding deformations or perforations in their section that weaken them.

The difficulty of building construction structures in two perpendicular directions, both being at the same level, lies in the fact that the moment of inertial of the profiles must not be reduced in the joint areas between profiles, both in the joints of structural profiles with each other, as well as in the joints between auxiliary profiles and in the joints between structural profiles and auxiliary profiles.

In order to avoid reducing the moment of inertia of the structural profiles, only perforations are made in the profiles in the area of their web and, more specifically, in the vicinity of the neutral fiber of the profiles.

The resistance of a profile and its arrow-shaped deformation is significantly worsened if the joint between profiles is articulated. To ensure that the mechanical resistance of the profile is maintained, it is necessary to check that the joints between profiles maintain the greatest possible degree of continuity of their inertia, improving the level of embedment of the joint.

The resistance of the joint, in profiles with an embedded-embedded joint at their support points, measured in terms of the deformation deflection "f" of the profile, for a uniformly distributed load, is given by:

$$f_{E-E} = \frac{1}{384} \frac{q\, L^4}{EI}$$

While the resistance of the joint, in profiles with a hinged-hinged joint at their support points, measured in terms of the deformation deflection $f$ of the profile, for a uniformly distributed load, is given by:

$$f_{A-A} = \frac{5}{384} \frac{q\, L^4}{EI} = 5 \times f_{E-E}$$

As can be seen, given the same inertia "I" of the profile, the same length "L" of the profile, the same modulus of elasticity "E" of the material used in the profile and the same load "q" applied on the profile, the deformation in terms of deflection "f" in the bi-articulated case is 5 times higher. For this reason, when the joints between profiles are bi-articulated, a profile with an inertia 5 times higher is required to obtain the same deformation as when the joints are bi-embedded.

Traditionally, the maintenance of the moment of inertia of the profile in the joint area between profiles is achieved by inserting these splicing pieces into the respective ends of the profiles to be joined, generating a great use of splicing pieces, screws and labor. and increasing the cost of the system.

The installation of a roof, partition or facade enclosure requires aligning these profiles and precisely adjusting the distance that separates said profiles. The plasterboard or flat element that is fixed to these profiles has defined dimensions and tolerances. The primary profiles with perforations or conformations facilitate the alignment and adjustment of the separation between the secondary profiles joined to the primary profile. Secondary profiles with holes or shapes make it easy to align and adjust the gap between the primary profiles joined to the secondary profile.

The types of slabs and construction structures for suspended roofs existing on the market are very diverse, both in terms of the types of materials used and the load-bearing capacity of the elements used. In this regard, its classification into two categories is important:

(1) those whose load-bearing capacity is uniform throughout its length and
(2) those in which their bearing capacity is defined by longitudinal and or transverse load-bearing sections, with these load-bearing sections delimiting surfaces of lower load-bearing capacity.

In the first case, they would include, for example, the continuous slabs formed by a concrete slab and in the second case, they would include, for example, the slabs made up of concrete joists and ceramic vaults. The second case would also include reticular concrete slabs or the support trusses of a roof or industrial building.

The distribution of the zones with load-bearing capacity and the distance that separates these zones determines the layout of the primary structure and the distance between the fixing points of the primary structure to the load-bearing structure.

Therefore, it is necessary to develop a simple structure, with fewer parts but maintaining high resistance, to allow its use in construction.

**Summary of the invention**

The present invention refers to a profile system for construction profiles, specifically in the field of mixed double construction structures at the same level.

The purpose of this invention is to provide a practical and convenient system for joining construction profiles without the need to use joint parts such as screws, by means of a coupling system for the different profiles in a simple and durable manner.

With this invention it is possible to carry out the joint of profiles, which comprises at least one primary profile and at least one secondary profile; in such a way that the joint is fixed in the three directions of space, without the need for joint pieces.

In the proposed solution, the maintenance of the moment of inertia "I" of the primary profile is achieved by avoiding perforations and deformations of the profiles in the areas of the profile far from its neutral fiber, that is, the curved material surface of an elongated piece or of a plate, deformed by bending, that separates the compressed zone from the tension zone. This effect is especially important in structural (primary) profiles, in which sections far from the neutral fiber cannot be perforated or deformed, in order to preserve the inertia of the structure.

In this solution, unlike the known state of the art, the improvement in the operating mode of the secondary profile is achieved by joining three mechanisms:

A) using configurations that maintain the continuity of the profile in the areas far from the neutral fiber,
B) making their couplings in areas close to or coinciding with the primary profile, wherein the effort requested by the secondary profile is less, and
C) raising the height of the support points of the ends of the secondary profiles above the height of the primary profiles on which they rest, thus creating a negative pre-deflection, to reduce the maximum deflection that is created in the center point of the secondary profile with respect to the height of the primary profiles.

This last mechanism is especially important in auxiliary (secondary) profiles, in which, due to their reduced dimensions, their moments of inertia are reduced and the deflection generated is high.

Thus, in a preferred embodiment, the joint of the present invention comprises at least one primary profile and at least one first secondary profile.

A primary element is located in each of the primary profiles and has at least one primary web with at least one perforation, and at least one primary flange, where the at least one primary web and/or the primary flange have a secondary profile lock flange.

In a first embodiment, the primary element can present a basic L-shaped section, consisting of a primary web and a primary wing, however, other C-shaped sections are also acceptable, either with two primary webs (they present at least one perforation each, aligned one with the other) joined by a primary wing, or with two primary wings flanking a primary web. In turn, the primary element can present a section with two primary webs and two primary wings, presenting a section, for example, square. Preferably, the primary profile has the same section as the primary element.

Each perforation of the at least one primary web has a locking slot and a passage slot, the passage slot being penetrable by a first secondary element located in the first secondary profile to be joined.

Thus, when the perforation presents the passage and locking slots, a sliding position and a locking position can be distinguished.

Specifically, the passage slot, or sliding position of the perforation of the primary web of the primary element allows introducing one end of the first secondary element through said perforation. By staying in the passage slot, the end of the first secondary element is at a height level where the secondary element does not interfere with the primary web of the primary element, and is free to move in the longitudinal direction through the primary web of the first primary element.

The separation between both positions is achieved by means of a protrusion configured to hold the secondary element of the secondary profile, in each of the positions. In this way, a secondary element cannot directly access the locked position, but must be inserted into the displacement position and elastically deformed in order to be able to make the transition from this initial position to the locked position, resulting in a joint clipped between the primary profile and the secondary profile.

Each perforation of the primary element is located in areas close to the neutral fiber of the primary profile, without affecting the primary wing. The distance between the perforations of the primary profile defines the spacing between the secondary profiles (secondary modulation - S). This distance between perforations can also be a value that coincides with an integer divisor of the required spacing between secondary profiles.

The first secondary element, located in the first secondary profile to be joined, has an end comprising a secondary web and at least one secondary wing, wherein said end is configured to be introduced into the perforation of the primary element.

Said end of the first secondary element can have an L-shape. The perforation in the primary element has a design such that it allows a slight rotational movement of the secondary element in the displacement position. This turning movement can be achieved by presenting some clearance in the travel position, which facilitates the entry of the secondary element. Alternatively, the end of the first secondary element may have a "C"-like shape, with a secondary web and two secondary wings. This configuration, despite presenting greater rigidity, allows displacement from a displacement position to a locked position, in a manner equivalent to the L-shaped configuration.

In a preferred embodiment, the secondary profile has the same section as the secondary element. Thanks to this configuration, the secondary profile can completely traverse the perforation of the primary element.

Optionally, in a preferred embodiment of the present invention, the secondary elements can have a geometry that incorporates two ridges on their secondary wings, either facing inwards or facing outwards, presenting a C or omega shape, respectively. In this type of configuration, with two secondary wings and a rim on each one of them, the ridges of the secondary wings of the first secondary element can be in the same plane as it is arranged with a determined inclination. In turn, the lateral ridges can be found exclusively on the secondary element or else be formed as part of the entire secondary profile.

Additionally, the first secondary element has at least one slot or a conformation that affects its secondary web, to the secondary wings or both, each groove or conformation configured to be penetrated by the primary element of each of the primary profiles and block the input displacement of the first secondary element through the perforation. Unlike the groove, where part of the secondary element is removed, shaping presents a deformation of the element, maintaining the section of the secondary element continuously. In this way, the conformation option avoids, therefore, the rupture of the element avoiding the weakening and the reduction of the moment of inertia of the system.

In order to exceed the displacement zone, an intense spinning is required, elastically deforming the secondary element, and allowing the existing protrusion between the slits to be overcome. However, to reach the locked position, it is necessary for the secondary element to be previously aligned with each of the primary elements of the different primary profiles existing in the system. That is, prior to carrying out the intense spinning, the at least one groove or conformation of the first secondary element must be aligned with each one of the primary elements, so that they penetrate said groove or conformation, allowing the spinning.

Additionally, in a preferred embodiment, the joint is made with three profiles, where two secondary profiles are connected to a primary profile. In this sense, the profile system has a second secondary element located in a second secondary profile to be joined, where said second secondary element has an end that can be joined to the end of the first secondary element.

This coupling can be a narrowing of the end of the second secondary element, the outer geometry of which coincides with the inner geometry of the first secondary element, in such a way that the end of the second secondary element can be inserted rigidly into the end of the first secondary element.

In an equivalent manner, the coupling between the two secondary elements can be carried out by narrowing the end of the first secondary element, inserting this into the end of the second secondary element.

In turn, optionally, a lock is established between these two secondary elements by means of a means configured to prevent the separation of the first and second secondary elements once the coupling has been carried out. This means can consist of a tongue and groove joint between these elements.

Thus, a configuration can be found where the second secondary element comprises a protrusion at the flange end of its secondary wing, which corresponds to a space in the secondary wing flange of the first secondary element. Alternatively, the joint can be arranged in the secondary web or the secondary wing of the secondary elements.

Additionally, the second secondary element also comprises a groove or conformation in its secondary web. Both, either a groove or a conformation, are configured to mate with the flange located on the primary element once the secondary elements are positioned in the locking groove, reaching the locking position, of the primary element. In this way, the fastening of the secondary elements to the primary element is achieved, avoiding the greater entry of the first secondary element through the perforation of the primary element.

In this way, as has been described, there are two positions, displacement and blocking, of the secondary elements with respect to the primary element.

In the first place, there is a raised or initial position, where the end of the first secondary element has passed through the perforation for the passage slit of the web of the primary element located in the at least one primary profile, depending on the length of the first secondary profile and the number of primary profiles it can reach, and is in the sliding position. In this position, the first secondary element can be moved across the primary element to a greater or lesser extent.

This aspect is highly relevant in those embodiments with three profiles, where the greater or lesser entry of the first secondary element facilitates the coupling with the second secondary element, which translates into greater ease for the installation of this system by a user.

Thus, in three-profile joints, once the two secondary elements are coupled, they can move to the second position, or locked position, where said secondary elements remain aligned with respect to the primary element and fixed to each other. To do this, they are elastically deformed so that they can overcome the protrusion existing in the primary element, achieving alignment of at least the first secondary profile with the primary profile.

In this way, once the first and second secondary elements of the first and second secondary profiles, respectively, are coupled, they can be moved to the locked position, where the first secondary profile is aligned with the primary profile.

Additionally, in order to continue installing the profile system, the second secondary profile can additionally contain an element, equivalent to the first secondary element of the first secondary profile, located at the supplementary end of the second secondary element of the second secondary profile.

The alignment of the second secondary profile is achieved with the alignment of the next primary profile. That is, the entry of the supplementary end of the second secondary profile into a trailing primary element located at a primary modulation distance L (or an integer multiple of the distance L), equivalent to the entry of the first secondary element of the first secondary profile on the primary element, it allows the alignment of the second secondary profile to the subsequent primary profile.

Additionally, to achieve a greater fixation of the secondary elements with the primary element, the joint system presents an additional fastening configured for said blocking, by means of the entry of the flange located on the primary wing of the primary element in the groove or conformation located in the second secondary element. In this way, the displacement of said elements with respect to the primary element is avoided. In a preferred embodiment, the first secondary element also has a groove or conformation coinciding with the flange located on the primary wing of the primary element, favoring the fixing of this first secondary element with respect to the primary element.

Alternatively, or in conjunction with the joining of the two secondary elements with the flange of the primary wing of the primary element, the joining system can comprise a second fastening of the secondary elements with the primary element.

In this case, the second secondary element has a second groove or conformation that penetrates the web of the primary element when the secondary elements are in the locking slot, blocking the displacement of the first and second secondary elements in the longitudinal direction through the web of the element. Once again, the first secondary element can comprise a groove or conformation that penetrates the web of the primary element, increasing the fastening of the elements of the joining system.

However, depending on the connection between the first and second secondary elements, the end of the second secondary element does not reach the primary web of the primary element. In this case, the existing groove or conformation in the first secondary element penetrates directly into the primary web of the primary element, directly blocking the movement of this secondary element.

Viewing the many acceptable possibilities for individual configuration between these profiles, the area of the primary web of the primary element where it is penetrated by at least one of the secondary elements, either the first secondary element or both, will depend on the type of groove or existing conformation in secondary elements.

Thus, in embodiments where the grooves or conformations of the secondary elements are located throughout the entire web and part of the secondary wings of the elements, the area is uniform and continuous. However, in those embodiments where the groove of the secondary elements is located in a portion of the secondary web of the secondary elements, the primary element will further comprise a protrusion on its primary web coinciding with the groove of the secondary elements.

Therefore, the joining system can have a double fastening of the two secondary elements with the primary element, through the entry of a flange located in the primary wing of the primary element, or else in the area of the web of the primary element. Thus, in a preferred embodiment of the system, a configuration is presented with a fastening means that both fasteners have.

The perforation of the web of the primary element, as well as the type of slot or conformation present in the secondary elements, determines the distance between the primary wing of the primary element and the secondary wing or web of the first secondary element, once the first secondary element has been accommodated in the locking slot of the perforation. This height can be set so that the secondary wing of the secondary element rests on the primary wing of the primary element.

In an alternative embodiment, this height can also be adjusted so that the secondary wing of the first secondary element is elevated with respect to the primary wing of the primary element, allowing that when the secondary profile is deformed it does not totally or partially exceed the plane defined by the primary profiles.

This configuration is relevant for the purpose of achieving less deformation and greater planimetry of the flat products forming the roof, partition or facade enclosure, depending on the loads applied to it.

As an illustrative example, if the maximum deformation of the secondary profile is $F$ and the minimum is 0, measured in terms of deflection, displacing the perforation $F/2$ the deflection in the center of the secondary profile may range from a minimum of $-F/2$ and maximum of $F/2$ with respect to the plane defined by the primary profiles.

In a preferred embodiment, by coupling the end of the second secondary profile to the end of the first secondary profile, the groove or shape of the first secondary element is separated from a groove or shape of the second secondary element by a distance equivalent to the length of the primary wing of the primary element. In this way, it is achieved that the double fastening corresponds to the web and the flange located at the end of the primary element.

The installation of a construction structure that includes the joint system described above can be carried out by placing primary profiles in parallel, in such a way that the secondary profiles, arranged perpendicular to them, will configure a plane on which the plasterboards forming the roof, the wall or any other equivalent enclosure are supported.

In this sense, in a second aspect of the invention, the procedure for installing the profile system described above consists of the following steps:

a) Entry of the end of the first secondary element, through the passage slot, into the perforation present in the primary web of the primary element of at least one primary profile.

By means of this entry, the first secondary element is inserted through the passage slot into the sliding position of the primary element. Said sliding position presents a slight clearance that allows a slight rotation of the first secondary element. Additionally, the secondary web of the first secondary element does not interfere with the primary web of the primary element, so it can move freely along the first secondary element and facilitate the joint with the second secondary element.

b) Alignment of the groove or shaping of the end of the first secondary profile with the locking flange of the primary element of the at least one primary profile.

In this step, the placement of the secondary element with respect to the primary element is carried out, so as to allow the penetration of the flange of the primary element into the groove or conformation of the first secondary element.

c) Displacement, preferably by rotation, of the first secondary element from the passage slot to the locking slot, the first element moving from the sliding position to the locking position while simultaneously inserting the locking flange of the primary element into the slot or conformation of the first secondary element.

In a preferred embodiment, the first secondary element also comprises a means to limit its entry through the perforation of the primary web of the primary element. This means may be a tongue and groove joint between the first secondary element and the primary element.

Thus, in a preferred embodiment, the tongue and groove joint consist of a groove or conformation located, preferably, in the web and part of the secondary wing of the first secondary element. In this way, said groove or conformation is penetrated by the primary web of the primary element, limiting the advance of the first secondary element in a way that is complementary to the flange present on the primary wing of the primary element that limits the movement of the second secondary element.

In the case of a groove located in part of the secondary web of the first secondary element, the web of the primary element can present a protrusion on its primary web coinciding with the groove of the first secondary element.

Therefore, step b) of alignment of the secondary and primary element is carried out by adjusting the groove or conformation of the first secondary element with the locking flange of the primary element.

Additionally, the profile system installation process can present an additional step, consisting of the coupling of two ends of secondary elements. In this three-profile joining configuration, the coupling of the secondary profiles is generated once the first secondary element has been introduced into the passage slot (step a), and can be done both prior to aligning the secondary element (step b) as after the placement of the first secondary element in its locking position, due to the folding capacity of the primary wing of the primary element.

In this way, by means of the joints described in the present invention, a reduction of the maximum deflection of the system of up to 50% is achieved, due to the effect of the pre-deflections at the support points of the secondary elements on the primary element, creating a small negative arrow when the system is not loaded, to a small positive deflection when the system is loaded.

Additionally, the present invention also provides a reduction in the number of hangs. Depending on the embodiments used, a reduction between 50-70% is achieved, as a consequence of the effect of the double structure working at the same level, without affecting the moment of inertia of the primary profiles.

Therefore, unlike the present state of the art, a system is achieved that presents important advantages. According to the present invention, the use of connecting pieces is not required at the respective ends of the join profiles, since the joint elements are included in the profiles themselves.

In this way, the use of a number of parts to achieve the joint of these systems is avoided, reducing the cost generated by these parts, as well as the labor required for it.

The figures show the following elements:

1. Primary profile
10. Primary element
11. First primary web of the primary element
11'. Second primary web of the primary element
12. Perforation
13. Locking slit
14. Passage slit
15. Primary wing of primary element
15'. Upper primary wing of primary element
16. Locking flange of primary element
17. Transition projection
2. First secondary profile
2'. Second secondary profile
20. First secondary element
20'. Second secondary element
21. Secondary web of the first secondary element
21'. Secondary web of the second secondary element
22. Secondary wing of the first secondary element
22'. Secondary wing of the second secondary element
23. Flange of the first secondary element
23'. Flange of the second secondary element
24. Groove of the first secondary element
24'. Groove of the second secondary element
25. Longitudinal end of the first secondary element
25'. Longitudinal end of the second secondary element
4. Profile system
41. Fastening between first element and the second elements
42. Locking means between first and second secondary element

Throughout the description and claims the word "comprises" and its variants are not intended to exclude other technical characteristics, components or steps. Furthermore, the word "comprises" includes the case "consists of". For those skilled in the art, other objects, advantages, and features of the invention will emerge in part from the description and in part from the practice of the invention. The following examples and drawings are provided by way of illustration, and are not intended to be limiting of the present invention. Furthermore, the present invention covers all possible combinations of particular and preferred embodiments indicated herein.

**Brief description of the drawings**

Below, to facilitate the understanding of the invention, by way of illustration, but not limitation, an embodiment of the invention will be described with reference to a figure.

Figure 1 shows a perspective view of a profile system with a construction structure comprising two primary profiles and multiple secondary profiles.

Figure 2 shows an embodiment of joining a primary element and a set formed of five secondary profiles with a first L-shaped secondary element in each of the five secondary profiles.

Figures 3a and 3b show a preferred embodiment in perspective of the coupling of two C-shaped secondary elements of the profile system with one fixing grove each.

Figures 4a and 4b show a preferred embodiment in perspective of the coupling of two secondary elements of the profile system, where the second secondary element comprises two fixing grooves.

Figure 5a and 5b show two embodiments of the coupling between the first and second secondary element.

Figures 6a, 6b, 6c and 6d show a section of the system in which the different steps of the assembly procedure of two C-shaped and omega-shaped secondary profiles with the primary profile are distinguished.

Figure 7 shows a detailed perspective of the joint of the primary element and two secondary elements that form the profile system.

Figures 8a, 8b, 8c, 8d show the steps in the assembly procedure of two secondary profiles with the primary profile.

**Detailed description of the invention**

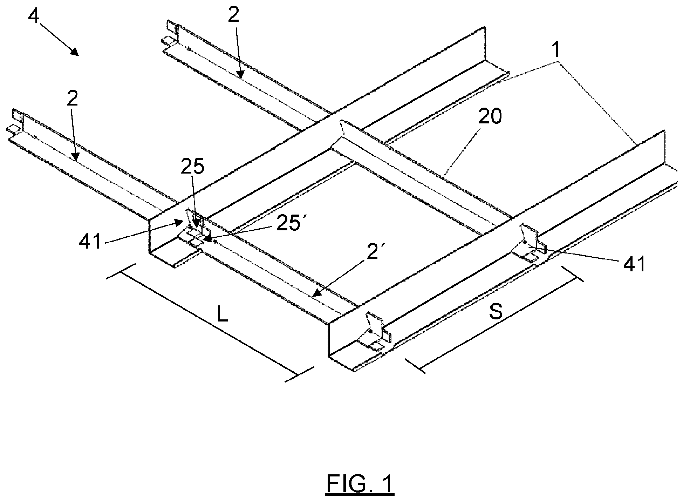

Figure 1 shows a perspective view of a profile system (4) with a construction structure comprising two primary profiles (1) and multiple secondary profiles (2).
In the first place, it can be seen how a single secondary profile (2) is joined to two primary profiles (1), while in the lower part the joint between two secondary profiles (2, 2') is included, coinciding with the two primary profiles (1) joined with a single secondary profile (2). Thus, each secondary profile (2) comprises a first secondary element (20), which can pass through a primary element (10), located in each of the primary profiles (1) of the construction structure.
The preferred configuration of the construction structure is made up of at least one primary profile (1) located at a distance L, or an integer multiple of L, from another primary profile (1) later, present in the construction structure.
In an alternative embodiment, where the first secondary profile (2) does not have a sufficient length, each perforation of the primary profile (1) serves as a joint to a first secondary profile (2), coupled with a second secondary profile (2'), preferably arranged perpendicularly, to the primary profile (1), giving rise to a construction structure capable of supporting a flat construction product, such as a plasterboard, used for the construction of a roof, wall or facade enclosure.
This coupling between several secondary profiles (2, 2') is carried out between the longitudinal ends (25, 25') of a first secondary element (20) and a second secondary element (20'), located in each of the secondary profiles. These longitudinal ends (25, 25') have such a configuration that they can be nested together. Thus, in an embodiment with L-shaped elements, the longitudinal ends (25, 25') of the secondary elements (20, 20') can present a complementary termination, each of them and be nestable one in the other, obtaining a joint in the form of a checkerboard.

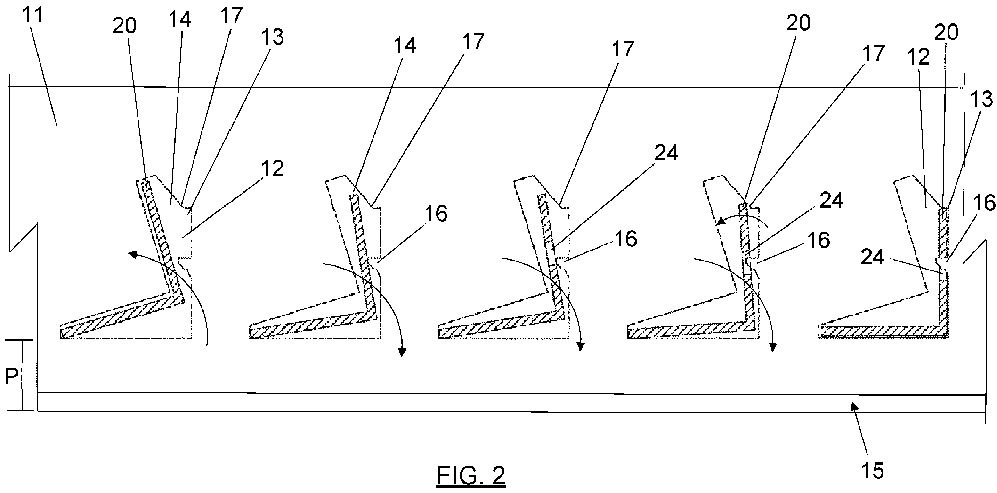

Figure 2 shows an embodiment of the joint of a primary element (10) and a set formed by five secondary profiles (2) with a first L-shaped secondary element (20) in each of the five secondary profiles (2).
In this figure, a primary element (10) can be seen specifically, which comprises five perforations (12) in its primary web (11), where a first secondary element (20) is inserted in each of the five perforations (12).
Thus, each perforation (12) is configured to be penetrated by a first secondary element (20), and in it a sliding position and a locking position are differentiated, which are separated by a transition protrusion (17). Additionally, the perforation (12) comprises a locking flange (16) configured to fix the position of the first secondary element (20).
In the present embodiment, the locking flange (16) is located on the side of the perforation (12), coinciding with the secondary wing (22) of the first secondary element (20). Alternatively, this locking flange (16) can be designed to correspond to the secondary web (21) of the secondary element or even both, the locking flange (16) being located in the corner of the perforation (12).
For its part, in the present figure, the first secondary elements (20) are shown in different positions during their installation.
Firstly, located to the left of the figure, a first secondary element (20) is inserted in the displacement position (14). This is the first step of the installation, where the longitudinal end (25) of the first secondary element (20) is introduced into the perforation (12) of the primary element (10).
Next, it can be seen how the first secondary element (20) presents a small spinning movement, due to the certain clearance that the displacement position (14) of the perforation (12) presents. This displacement makes it possible to support the first secondary element (10) on the locking flange (16) and to continue the displacement longitudinally within the perforation (12).
The next step is the alignment of the groove (24) of the first secondary element (20) with the locking flange (16). In this specific embodiment, said locking flange (16) is located on the side of the perforation (12) coinciding with the groove (24) located in the secondary wing (22) of the first secondary element (20). The arrangement of the locking flange (16) in the perforation (12) determines the presence of the groove (24) in the secondary web (21) or secondary wing (22), or even in both at the same time.
Alternatively, the groove (24) can be replaced by a conformation, which allows the entry of the locking flange (16) in an equivalent way to the groove (24), but unlike this, it maintains the continuity of the section of the secondary element (20).

Once the groove (24) or conformation is aligned with the locking flange (16), in the longitudinal direction of the first secondary element (20), as a consequence of the small spinning movement, there is a matching between the groove (24) of the first secondary element (20) with the locking flange (16) of the primary element (10), entering the locking flange (16) inside the groove (24) and blocking the longitudinal advance of the first secondary element (10). In this position, by means of a more intense spinning of the first secondary element (20), causing the deformation of the geometry of the secondary profile, the transition protrusion (17) is exceeded.

The transition protrusion (17) is configured to allow the first secondary element (20) to easily pivot from the passage slot (14) to the locking slot (13), once the slot (24) is aligned on the locking flange (16), and also to prevent the first secondary element (20) from being able to reverse said pivoting by spinning from the locking slot (13) to the passage slot (14).

Therefore, the use of profiles of thin thickness is preferable. In other words, in the present invention it is recommended to use profiles whose thickness allows generating a deformation of their geometry that allows the secondary profile to be pivoted from the sliding position to the locked position. In an alternative embodiment, suitable for thicker profiles, the first secondary element (20) has a local weakening, in its coincidence with the transition protrusion (17), which allows local deformation of the profile geometry when the transition protrusion (17) is exceeded.

Finally, the first secondary element (20) sits on the perforation (12) of the primary element (10), reaching the locking slot (13), where the assembly of the two profiles, through the primary element (10) and secondary element (20), remains stable, preventing the joint from being released by spinning or vertical displacement of the first secondary element (20). Only by means of a change of the geometry of the secondary profile, expressly forced, can both profiles be disassembled.

During this installation process, by being able to support the first secondary element (20) on the locking flange (16) during its entry, manipulation by the user is facilitated during the entry process of the longitudinal end (25) of the first secondary element (20) and the determination of the alignment of the groove (24) or conformation of this first secondary element (20) with the locking flange (16), which is done automatically during displacement once the slot (24) or conformation reaches the locking flange (16), moving the secondary element (20) from the sliding position to the locked position.

Alternatively, the locking flange (16) could be located along the primary wing (15) of the primary element (10), allowing a locking flange (16) to correspond with the multiple perforations (12) present in the primary web (11).

From a functional point of view, the present invention makes it easier to align the primary and secondary profiles from a distance (more than 1 meter away) since it converts a precision operation, such as fixing the groove, into a sliding operation and smooth remote spinning of the profile (self-alignment of the profile). This translates into a great improvement compared to current solutions in the case of the installation of roofs and partitions, allowing an installer to assemble various profiles without having to go down, move the ladder and go back up. In practice it has been proven that an installer can install more than 6 secondary profiles, equivalent to a total profile length of more than 8 meters, without moving from a certain position. It has also been proven that with a slight torque, less than that necessary to open a door handle, the transition of the first secondary element is made from the passage slot to the locking slot.

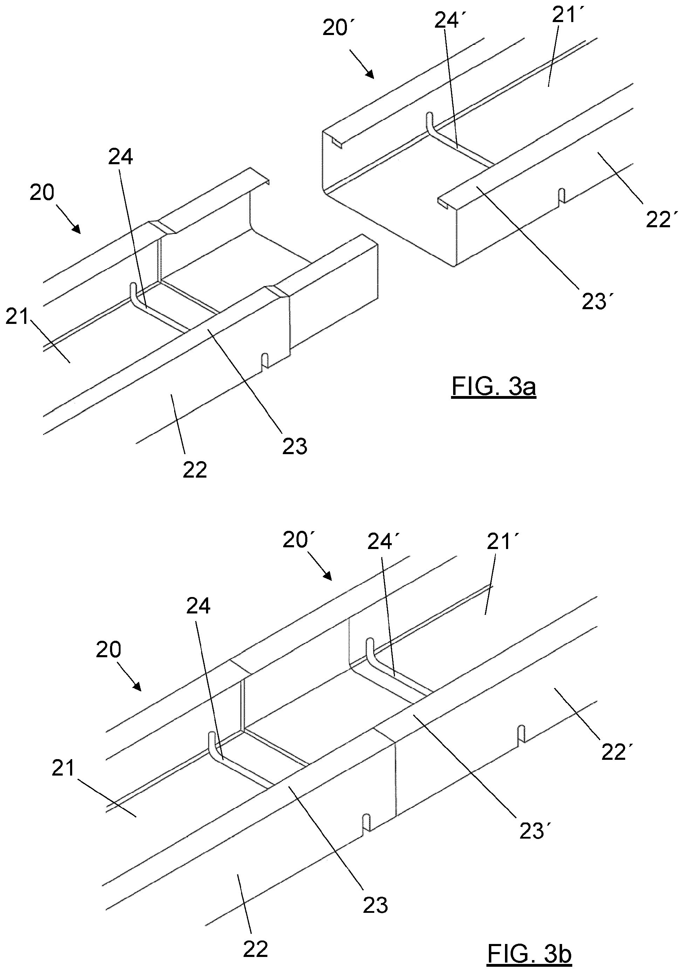

Figures 3a and 3b show a preferred embodiment in perspective of the coupling of two C-shaped secondary elements (20, 20') of the profile system with a fixing groove (24, 24') each. Again, the grooves (24, 24') can be replaced by a shape.

Unlike the previous figure, where the joint between two profiles was appreciated, a primary element (10) with a secondary element (20) in the shape of an L, in this figure the coupling of two secondary profiles (20, 20') in form C is appreciated. This coupling is necessary to be able to maintain the continuity of the secondary profiles (2, 2') throughout the construction structure, which comprises several primary profiles (1). In this way, the second secondary profile (2') will act as the first secondary profile, with a first secondary element configured to be inserted into the perforation (12) of the next primary profile (1), and the next second secondary profile will be incorporated.

Firstly, Figure 3a shows these two secondary elements (20, 20') separately, while Figure 3b shows the coupling of the longitudinal ends (25, 25') of these secondary elements (20, 20').

As an alternative to the longitudinal ends (25, 25') configured in the form of a checkerboard, the first secondary element (20), located in the first secondary profile (2), has a longitudinal end (25) with a narrowing. This narrowing is configured to be inserted into the longitudinal end (25') of the second secondary element (20'), located in the second secondary profile (2').

On the other hand, the presence of a fastening (41) comprising a groove (24, 24') in each of the secondary elements (20, 20') can be seen. In this way, the groove (24) of the first secondary element (20) is configured to be penetrated by a first locking flange (16) located in the primary web (11) of the primary element (10), while the groove (24') corresponding to the second secondary element (20'), coincides with a second locking flange (16) present on the primary wing (15) of the primary element (10).

In this particular embodiment, as can be seen in the figure, the groove (24) is located along the entire secondary web (21) and part of the secondary wings (22) of the first secondary element (20). For this reason, the area of the primary web (11) of the primary element (10) penetrating the groove (24) acts as a set as a locking flange (16), being a uniform area that can extend from one side to the other of the perforation (12), without the need for an additional flange. Said flange is presented in those embodiments where the groove (24) is found only in a part of the secondary web (21) or secondary wing (22) of the first secondary element (20) as can be seen in Figure 2. Similarly, the locking flange (16) of the primary wing (15) of the primary element (10) can have different configurations depending on the groove (24') existing in the second secondary element (20').

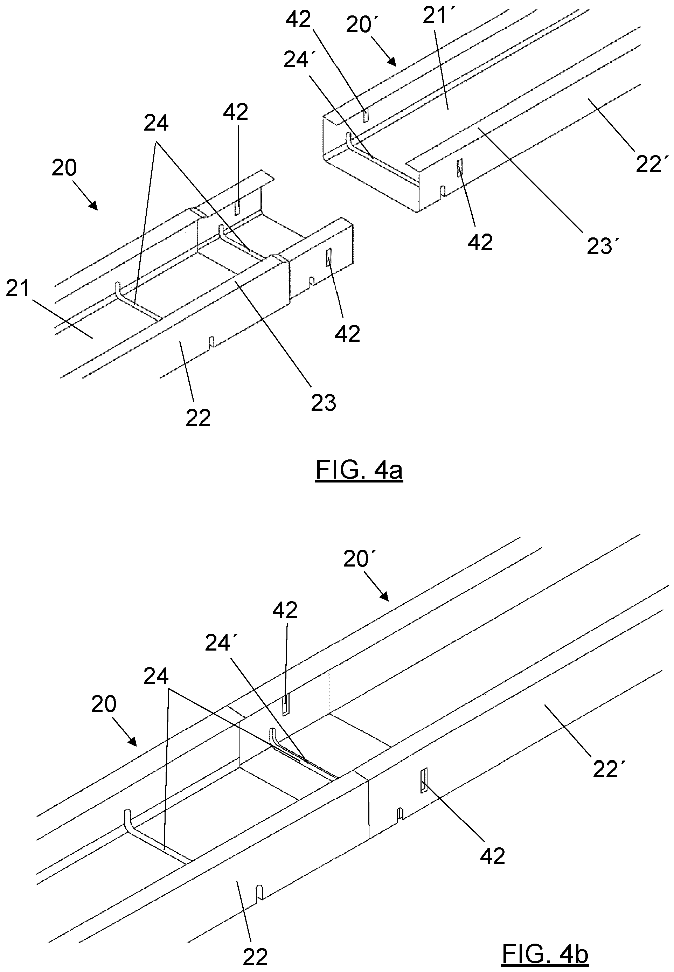

Figures 4a and 4b show a preferred embodiment in perspective of the coupling of two secondary elements of the profile system (4), where the first secondary element (20) comprises two fixing slots (24).

In this sense, unlike the previous case, in the present embodiment, the longitudinal end (25') of the second secondary element (20') passes through the perforation (12) of the primary web (11) of the primary element (10) in the opposite direction to the first secondary element (20).

Thus, the second groove (24') of the second secondary element (20') is arranged at such a distance from the first groove (24') of the second secondary element (20'), so that it is also penetrated by the locking flange (16) located in the primary web (11) of the primary element (10), during the locking position of the secondary elements (20, 20'). Therefore, a greater fixation of the system is achieved, by fixing the position of the two secondary elements (20, 20') by means of the penetration of the grooves (24, 24') in the primary web (11) of the primary element (10).

In an alternative embodiment, the groove (24), located in the first secondary element (20), and the slot (24'), located in the second secondary element (20'), in the overlap area between both secondary elements are penetrated simultaneously by a single locking flange (16) located in the web of the primary element (10). In this case, a second locking flange (16) located on the primary wing (15) of the primary element (10) is not necessary to carry out the fixing.

Additionally, it can be seen how the fixing between the first and second secondary elements (20, 20') can be carried out by means of a locking means (42). This locking means (42) is an optional tongue and groove joint located on the wings of both elements. This joint would be found, once located together with the primary element (1), outside the hole generated by the primary web (11) and the primary wings (15) of the primary element (10).

For fixing the secondary elements (20, 20'), there is a fixing between these two secondary elements by means of a blocking means (42) configured to prevent the separation of the first and second secondary elements (20, 20') once the coupling has been carried out. Preferably, the locking means (42) is a tongue-and-groove joint between both secondary elements (20, 20').

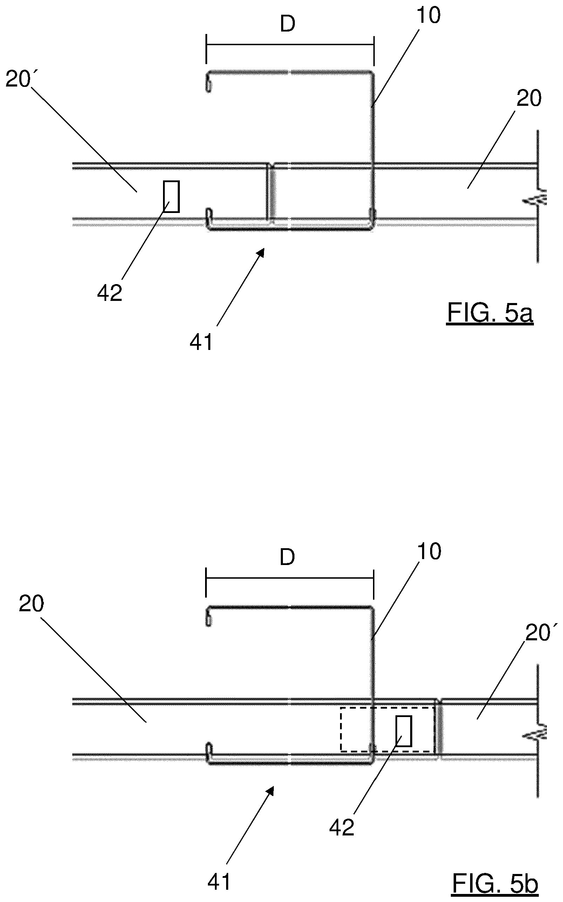

Figures 5a and 5b show the joint of the first and second secondary elements (20, 20'), with special detail of the grooves (24, 24') found in said elements, with the primary element (10).

Thus, first of all, in figure 5a, the joint between secondary elements (20, 20') can be seen inside the space generated by the primary web (11) and the locking flange (16) at the end of the primary wing (15) of the primary element (10). On the other hand, in Figure 5b, it can be seen how the joint of the secondary elements (20, 20') presents an exterior joint to the primary element (10).

In this figure, the possibility of a locking flange (16) can be appreciated, located along the primary wing (15) of the primary element (10), capable of locking the secondary elements (20, 20') of multiple perforations. (12) present in the primary web (11).

As can be seen in these diagrams, the present profile system (4) achieves a connection between the primary (10) and secondary (20, 20') profiles at the same height, generating a suitable surface for joining other compounds, such as the plasterboard that makes up a roof, a wall or a wall enclosure.

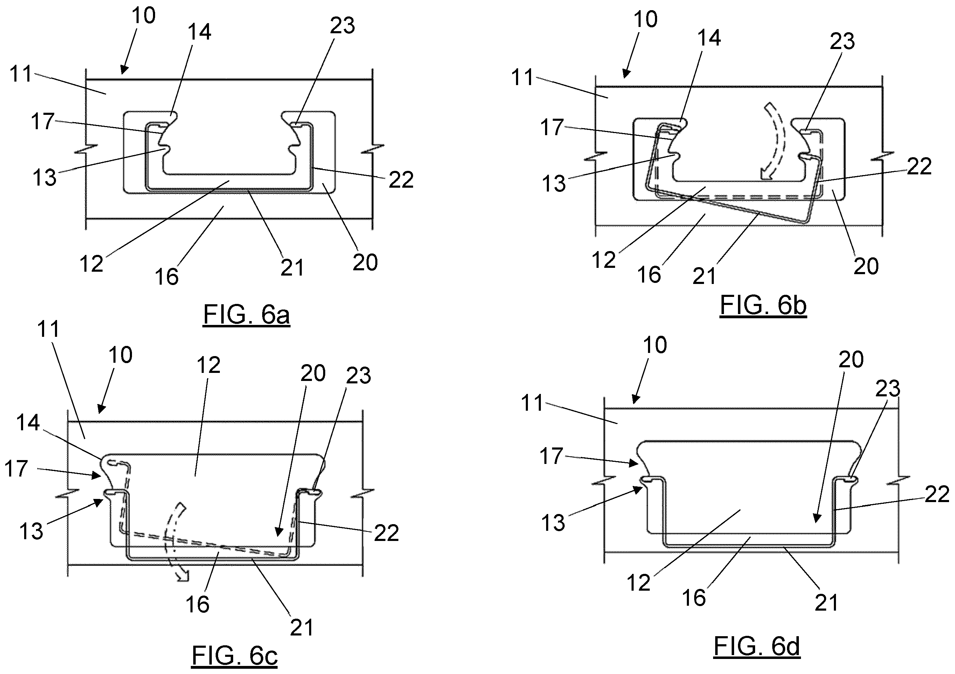

Figures 6a, 6b, 6c and 6d show a section of the system in which the different stages of the assembly procedure of the C-shaped and omega-shaped secondary elements (20, 20') with the primary profile are distinguished.

In the first place, figures 6a and 6b show an embodiment of the first secondary element (20) in the form of C. In this configuration, the flange (23) of the wing of the first secondary element (20) is facing inwards, for which the primary element (10) presents the blocking and passage slot (13, 14) in an area contained inside the perforation (12) of the primary element (10), that is, between the secondary wings (22) of the secondary element (20).

For their part, figures 6c and 6d show an embodiment of the first secondary element (20) in the shape of an omega. In this case, the blocking and passage slots (13, 14) are located on the outside of the perforation (12) of the primary element (10).

As a whole, Figure 6 shows the adjustment and locking process of the first secondary element (20).

Initially, the first secondary element (20) passes through the perforation (12) present in the primary web (11) of the primary element (10), matching the flanges (23) of the secondary wings (22) of the first secondary element (20) with the passage slot (14), reaching the sliding position.

In this position, the secondary web (21) of the first secondary element (20) does not interfere with the primary web (11) of the primary element (10). In this way, the first secondary element (20) can advance through the perforation (12) of the primary element (10) without any type of limitation. This advance favors the subsequent coupling of the first secondary element (20) with the second secondary element (20') since the primary element (10) does not interfere in said joint.

In this embodiment, the first secondary element (20) comprises a groove (24) configured to enter the web of the primary element (10). The groove (24), once aligned with the primary web (11), acting as a locking flange (16), of the primary element (10), allows the first secondary element (20) to move from the passage slot (14) of the primary element (10) to the locking slot (13) of said element.

In a similar way, the alignment and adjustment of the groove (24'), located in the second secondary element (30), can be carried out with respect to the locking flange (16) of the primary wing (15) of the primary element (10) and, depending on the configuration of the second secondary element (20'), of the primary web (11) in the embodiment with two grooves (34).

Also similarly, the transition protrusion (17) is configured to allow the first secondary element (20) to easily pivot from the passage slot (14) to the locking slot (13), once it is aligned the groove (24) on the locking flange (16), although in this case, due to the existence of double passage (14) and locking (13) slots, a first strong spinning in one direction and a second strong spinning in the opposite direction are required to cross both transition projections (17). The transition protrusion (17) is also configured to prevent the first secondary element (20) from being able to reverse said pivoting by spinning from the locking slot (13) to the passage slot (14).

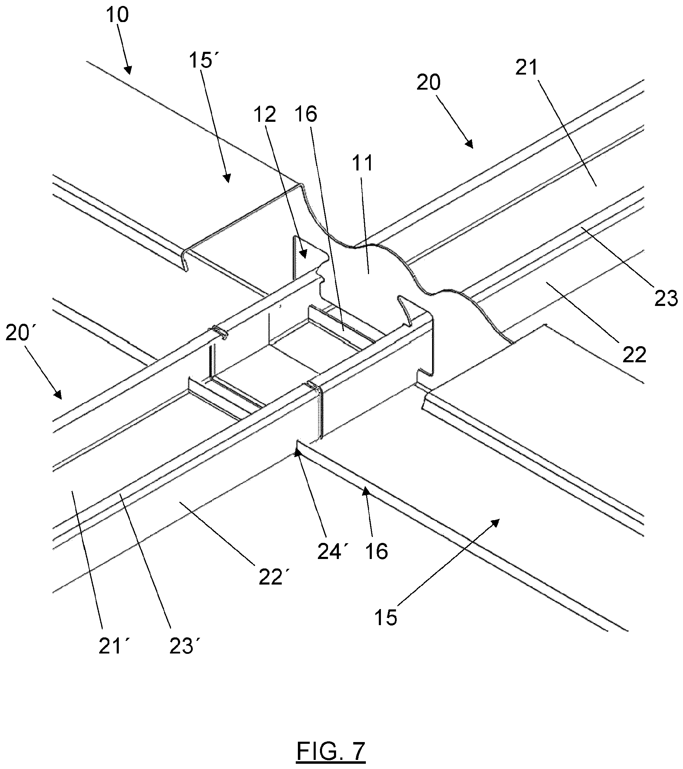

Figure 7 shows a perspective of the profile system (4) for a construction structure. This system comprises the primary element (10) and the two secondary elements (20, 20'). As can be seen, in Figure 6, the secondary elements (20, 20') are in a locked position in all three dimensions.

On the one hand, a primary profile (1) can be seen comprising a primary element (10) with a perforation (12). This perforation (12) is located in the primary web (11) of the primary element (10) and comprises two passage slots (14) and two locking slots (13). In this embodiment, the slots (13, 14) are located in the inner part of the perforation (12) due to the configuration of the secondary elements (20, 20') in the form of C, where the flanges (23) of the secondary wings (22) of the first secondary element (20) are oriented towards this direction.

Optionally, the locking means (42) between the longitudinal ends (25, 25'), which can be coupled to each other, of the secondary elements (20, 20') can be found inside the space of the primary element (10). On this occasion, the narrowing area to favor coupling is located at the longitudinal end (25') of the second secondary element (30) and both secondary elements (20, 20') present in this case a single fixing groove (24, 24'), although, as has been previously described, the profile system (4) can present other equally suitable configurations for the development of the present invention.

These grooves (24, 24') are aligned with the locking flange (16) of the primary web (11) and the primary wing (15) of the primary element (10), respectively. In this way, when the secondary elements (20, 20') are located in the locking slot (13), said grooves (24, 24') block the advance of the first and second secondary elements (20, 20'), respectively, through the perforation (12) of the primary element (10), reaching a fastening (41) of the profile system (4) in the three directions.

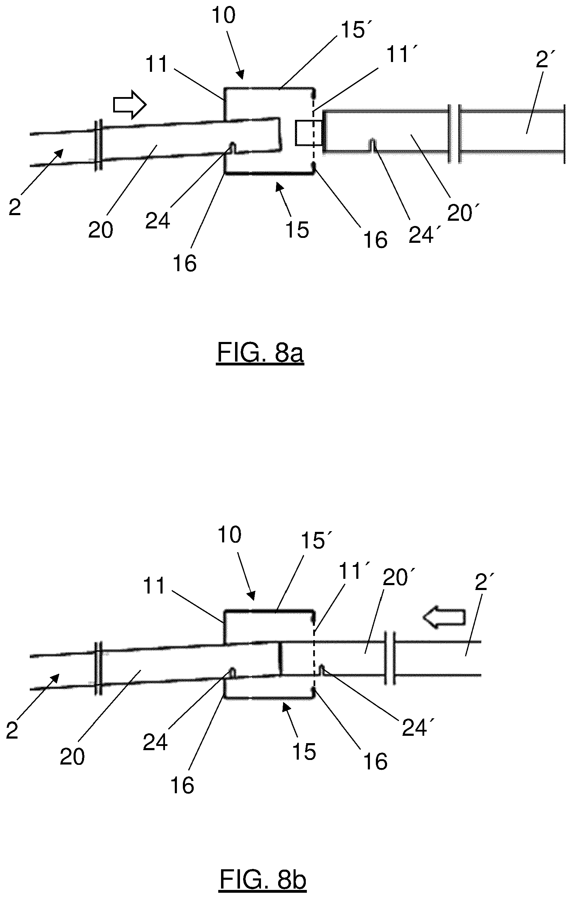

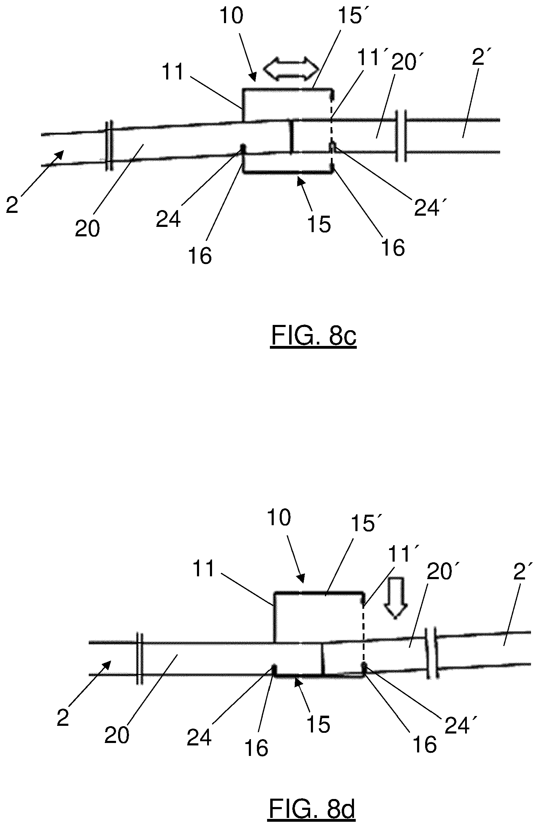

Figures 8a, 8b, 8c and 8d show the steps of the assembly procedure of two secondary profiles (2, 3) with the primary profile (1). On this occasion, a primary element (10) is represented with two primary webs (11, 11'), a first primary web (11) and a second primary web (11'), where each primary web (11, 11') has a perforation (12), and two primary wings (15, 15') joined to the two primary webs (11, 11') forming a square section.

In the first place, the entrance of the first secondary element (20), located in the first secondary profile (2), can be seen through the perforation (12) of the primary web (11) of the primary element (10), located in the primary profile (1). In an embodiment similar to that represented in Figure 7, the entry of the first secondary element (20) is carried out by placing the flange (23) in the passage slots (14) of the perforation (12). In this way, by being located at a higher height, the secondary web (21) of the first secondary element (20) does not interfere with the primary web (11) of the primary element (10), and can advance through the perforation (12) without limitation.

As a complement to the installation process previously described in a first secondary element (20) and a primary element (10), in this position, the coupling of the second secondary element (20') is made at the end of the first secondary element (20). The joint between these profiles (2, 2') is carried out by means of the longitudinal ends (25, 25') that can be joined to the secondary elements (20, 20'). On this occasion, the second secondary element (20') goes through the primary web (11'), and is coupled with the first secondary element (20) inside the primary element (10).

In a preferred embodiment, the profile system (4) has a narrowing at one of the ends of the secondary elements (20, 20'), which allows said element to enter the longitudinal end of the other secondary element. In this case, the narrowing is located in the second secondary element (20').

Additionally, optionally, the profile system (4) has a blocking means (42) between the secondary elements (20, 20'). This blocking means (42) can be a tongue-and-groove joint that limits its movement, once the coupling has been carried out. This joint can have different configurations, such as a protrusion at the end of one of the flanges (23, 23') of a secondary element (20, 20') that coincides with a space on the flange of the other secondary element (20, 20') or a protrusion on the wing of a secondary element coincident with the wing of the opposite secondary element.

Next, once the joint between the secondary elements (20, 20') has been established and secured, the said secondary elements (20, 20') are aligned with the primary element (10). The alignment consists of placing the secondary elements (20, 20') in such a way that the fastening (41) can be formed between the primary element (10) and the secondary elements (20, 20').

In a preferred embodiment, the groove (24') is located in the secondary web (21') and part of the secondary wing (22') of the second secondary element (20'), in such a way that the locking flange (16) spans the entire length of the primary flange (15) of the primary element (10).

Additionally, in this embodiment it can be seen how the first secondary element (20) also comprises a groove (24) in its secondary web (21) and part of its secondary wing (22). The groove (24) of the first secondary element (20) is configured to coincide with the locking flange (16) located in the primary web (11) of the primary element (10).

Therefore, in this embodiment, the alignment of the secondary elements (20, 20') is carried out by matching the groove (24, 24') of the first and second secondary elements (20, 20') respectively with the locking flange (16) of the primary web (11) and the locking flange (16) of the end of the primary wing (15) of the primary element (10). That is, the distance between the groove (24) of the first secondary profile (20) and the groove (24') of the second secondary profile (20'), when the two secondary elements (20, 20') are coupled, is equal to the distance (D) between the primary web (11) of the primary profile (1) and the locking flange (16) of the end of the primary wing (15) of said profile (1).

Finally, the presence of these grooves allows the secondary elements (20, 20') to be fixed to the primary element (10) by moving said secondary elements (20, 20') from the passage slot (14) to the locking slot (13). Thus, when the position of the secondary elements (20, 20') decreases to the locking slot (13), interference occurs between the primary web (11) and the locking flange (16) of the primary wing (15) of the primary element (10) with the secondary web (21, 21') of the secondary elements (20, 20'), blocking their movement.

As could be seen previously, in the preferred embodiment with two secondary wings (22, 22') with a flange (23, 23') in each one in the secondary elements (20, 20'), the displacement towards the locking slots it is in turn a sequential movement. This sequential movement is carried out by spinning the first secondary element (20) or by the set formed by the secondary elements (20, 20').

Alternatively, the second secondary element (20') can be coupled to the first secondary element (20) once the latter is in the locked position. For this, the wing of the primary element (10) presents a certain degree of tilting. Through this tilting, the locking flange (16) located on the wing of the primary element (10) does not interfere with the end of the first secondary element (20), allowing the joint of both secondary elements (20, 20') and their fixation once the locking flange (16) returns to the position prior to tilting.

In addition, construction structures with multiple primary profiles (1) can be obtained, separated by a distance corresponding to the primary modulation - L, joined to a first secondary profile (2) or to the set formed by the coupling of a first and second secondary profile (2, 2').

In the same way, construction structures with multiple secondary profiles (2) or sets formed by coupling a first and second secondary profile (2, 2') joined to a first primary profile (1) can be obtained. The distance between the secondary profiles (2) is determined by the secondary modulation (S), which is determined by the distance that separates two consecutive perforations (12) of the primary elements (10),

The primary modulation L is an integral divider of the length of the flat product that is fixed to the structure, typically 1.200 mm for products of 2.400 mm length and the secondary modulation (S) is an integral divider of the width of the flat product that is fixed to the structure, typically 600 mm, for 1.200 mm wide products.

Therefore, by means of the present joining system and its installation procedure, improvement in construction structures is achieved, facilitating installation and reducing, or even completely eliminating, the number of joining pieces used during said installation.

## Claims

1. A profile system (4) for a structure to be used in construction configured to join at least one primary profile (1) with at least one first secondary profile (2) the profile system (4) comprising

   - a primary element (10), located in the at least one primary profile (1), comprising

      a) at least one primary web (11), wherein each primary web (11) comprises at least one perforation (12) with at least one transition protrusion (17) configured to separate a locking slot (13) and a passage slot (14) defining a locking position and a sliding position, respectively, and
      b) at least one primary wing (15)

   wherein the primary web (11) and/or the primary wing (15) comprises at least one locking flange (16);
   - a first secondary element (20), located in the at least one first secondary profile (2), comprising

      a) at least one secondary web (21),
      b) at least one secondary wing (22), and
      c) at least one groove (24) or a conformation adaptable to the at least one locking flange (16) located in the primary web (11) and/or the primary wing (15) of the primary element (10), of the at least one primary profile (1);

   wherein said first secondary element (20) has a cross section configured to enter the passage slot (14) of the perforation (12) of the at least one primary web (11) of the primary element (10) of the at least one primary profile (1); and said first secondary element (20) is configured to tilt from the passage slot (14) to the locking slot (13), once in use the groove (24) or the conformation of the first secondary element (20) is aligned on the at least one locking flange (16) of the primary element (10).

2. The profile system (4) according to claim 1, wherein the first secondary element (20) comprises two grooves (24) or two conformations configured to be penetrated by a locking flange (16) located in a first primary web (11) and in a second primary web (11') or the primary wing (15) of the primary element (10), respectively.

3. The profile system (4) according to claims 1 to 2, wherein the first secondary profile (2) has a cross section equal to the first secondary element (20).

4. The profile system (4) according to claims 1 to 3, wherein the first secondary element (20) has a C-shaped cross section with the tabs (23) facing inward.

5. The profile system (4), according to claims 1 to 3, wherein the first secondary element (20) has an omega-shaped cross section with the flanges (23) facing outwards.

6. The profile system (4) according to claims 1 to 5, wherein the profile system (4) further comprises a second secondary element (20'), located in a second secondary profile (2'), which comprises at least one secondary web (21') and at least one secondary wing (22'), wherein the second secondary element (20) comprises a longitudinal end (25') with a nestable configuration with the longitudinal end (25) of the first secondary element (20).

7. The profile system (4) according to claim 6, wherein the second secondary element (20') has a groove (24') or a conformation located in the secondary web (21') and/or secondary wing (22') which, in use, is penetrable by the locking flange (16) of the primary element (10).

8. The profile system (4) according to claim 6, wherein the second secondary element (20') comprises two grooves (24') or two shapes penetrable by two locking flanges (16) located in a first primary web (11) and in a second primary web (11') or the primary wing (15) of the primary element (10), respectively.

9. The profile system (4) according to claims 6 to 8, wherein the first secondary element (20) comprises a narrowing at its end, insertable at the end of the second secondary element (20').

10. The profile system (4) according to claims 6 to 8, wherein the second secondary element (20') comprises a narrowing at its end, insertable at the end of the first secondary element (20).

11. The profile system (4) according to claims 6 to 10, wherein the first and second secondary elements (20, 20') comprise locking means (42) configured to fix the longitudinal coupling between said secondary elements (20, 20').

12. The profile system (4) according to claims 11, wherein the locking means (42) is a tongue-and-groove joint.

13. The profile system (4) according to claims 11-12, wherein the locking means (42) between the first and the second secondary element (20, 20') is located inside the primary element (10).

14. The profile system (4) according to claims 11-12, wherein the locking means (42) between the first and the second secondary element (20, 20') is located outside the primary element (10).

15. The profile system (4) according to claims 6 to 14, wherein the second secondary profile (2') has a cross section equal to the second secondary element (20').

16. Installation procedure for a profile system (4) comprising the following steps:

   i. entry of the first secondary element (20) by inserting the end of the first secondary element (20) through the passage slot (14) of the perforation (12) of the primary element (10) of the at least one primary profile (1);
   ii. alignment of the at least one groove (24) or conformation of the first secondary element (20) with the at least one locking flange (16) of the primary element (10) of the at least primary profile (1); and
   iii. joining the primary profile (1) with the first secondary profile (2) by moving the first secondary element (20) from the passage slot (14) to the locking slot (13), simultaneously introducing the locking flange (16) of the primary element (10) in the groove (24) of the first secondary element (20).

17. Installation procedure for a profile system (4) according to claim 16, wherein the movement from the passage slot (14) to the locking slot (13) is a sequential movement, carried out by rotating the first secondary element (20).

18. Installation procedure of a profile system (4) according to claim 16, wherein a second secondary element (20') is coupled to the first secondary element (20) after step i) of entry of the first secondary element (20) and prior to step ii) of alignment with the primary element (10).

19. Installation procedure of a profile system (4) according to claim 16, wherein a second secondary element (20') is coupled to the first secondary element (20) after step iii) of joining the primary profile (1) with the first secondary profile (2) by previously tilting the primary wing (15) of the primary element (10).

**Patentansprüche**

1. Profilsystem (4) für ein im Bauwesen zu verwendendes Bauwerk, das dazu konfiguriert ist, mindestens ein Primärprofil (1) mit mindestens einem ersten Sekundärprofil (2) zu vereinen, wobei das Profilsystem (4) Folgendes umfasst:

 - ein Primärelement (10), das sich in dem mindestens einen Primärprofil (1) befindet, umfassend

 a) mindestens einen Primärsteg (11), wobei jeder Primärsteg (11) mindestens eine Perforation (12) mit mindestens einem Übergangsvorsprung (17) umfasst, der dazu konfiguriert ist, einen Verriegelungsschlitz (13) und einen Durchgangsschlitz (14) zu trennen, die jeweils eine Verriegelungsposition und eine Gleitposition definieren, und
 b) mindestens einen Primärflügel (15)

 wobei der Primärsteg (11) und/oder der Primärflügel (15) mindestens einen Verriegelungsflansch (16) umfasst;
 - ein erstes Sekundärelement (20), das sich in dem mindestens einen ersten Sekundärprofil (2) befindet, umfassend

 a) mindestens einen Sekundärsteg (21),
 b) mindestens einen Sekundärflügel (22), und
 c) mindestens eine Nut (24) oder eine Ausformung, die an den mindestens einen Verriegelungsflansch (16) anpassbar ist, der sich in dem Primärsteg (11) und/oder dem Primärflügel (15) des Primärelements (10) befindet, des mindestens einen Primärprofils (1);

 wobei das erste Sekundärelement (20) einen Querschnitt aufweist, der dazu konfiguriert ist, in den Durchgangsschlitz (14) der Perforation (12) des mindestens einen Primärstegs (11) des Primärelements (10) des mindestens einen Primärprofils (1) einzutreten; und
 das erste Sekundärelement (20) dazu konfiguriert ist, vom Durchgangsschlitz (14) zum Verriegelungsschlitz (13) zu kippen, sobald im Gebrauch die Nut (24) oder die Ausformung des ersten Sekundärelements (20) auf den mindestens einen Verriegelungsflansch (16) des Primärelements (10) ausgerichtet ist.

2. Profilsystem (4) nach Anspruch 1, wobei das erste Sekundärelement (20) zwei Nuten (24) oder zwei Ausformungen umfasst, die dazu konfiguriert sind, von einem Verriegelungsflansch (16) durchdrungen zu werden, der sich jeweils in einem ersten Primärsteg (11) und in einem zweiten Primärsteg (11') oder dem Primärflügel (15) des Primärelements (10) befindet.

3. Profilsystem (4) nach Anspruch 1 bis 2, wobei das erste Sekundärprofil (2) einen Querschnitt aufweist, der dem des ersten Sekundärelements (20) gleich ist.

4. Profilsystem (4) nach Anspruch 1 bis 3, wobei das erste Sekundärelement (20) einen C-förmigen Querschnitt aufweist und die Laschen (23) nach innen zugewandt sind.

5. Profilsystem (4) nach Anspruch 1 bis 3, wobei das erste Sekundärelement (20) einen omegaförmigen Querschnitt aufweist, bei dem die Flansche (23) nach außen zugewandt sind.

6. Profilsystem (4) nach Anspruch 1 bis 5, wobei das Profilsystem (4) ferner ein zweites Sekundärelement (20') umfasst, das sich in einem zweiten Sekundärprofil (2') befindet, das mindestens einen Sekundärsteg (21') und mindestens einen Sekundärflügel (22') umfasst, wobei das zweite Sekundärelement (20) ein Längsende (25') mit einer mit dem Längsende (25) des ersten Sekundärelements (20) verschachtelbaren Konfiguration umfasst.

7. Profilsystem (4) nach Anspruch 6, wobei das zweite Sekundärelement (20') eine Nut (24') oder eine Ausformung aufweist, die sich in dem Sekundärsteg (21') und/oder Sekundärflügel (22') befindet, die im Gebrauch von dem Verriegelungsflansch (16) des Primärelements (10) durchdrungen werden kann.

8. Profilsystem (4) nach Anspruch 6, wobei das zweite Sekundärelement (20') zwei Nuten (24') oder zwei Formen umfasst, die von zwei Verriegelungsflanschen (16) durchdringbar sind, die sich jeweils in einem ersten Primärsteg (11) und in einem zweiten Primärsteg (11') oder dem Primärflügel (15) des Primärelements (10) befinden.

9. Profilsystem (4) nach Anspruch 6 bis 8, wobei das erste Sekundärelement (20) an seinem Ende eine Verengung umfasst, die am Ende des zweiten Sekundärelements (20') einsetzbar ist.

10. Profilsystem (4) nach Anspruch 6 bis 8, wobei das zweite Sekundärelement (20') an seinem Ende eine Verengung umfasst, die am Ende des ersten Sekundärelements (20) eingesetzt werden kann.

11. Profilsystem (4) nach Anspruch 6 bis 10, wobei das erste und das zweite Sekundärelement (20, 20') Verriegelungsmittel (42) umfassen, die dazu konfiguriert sind, die Längskopplung zwischen den Sekundärelementen (20, 20') zu fixieren.

12. Profilsystem (4) nach Anspruch 11, wobei das Verriegelungsmittel (42) eine Nut-und-Feder-Verbindung ist.

13. Profilsystem (4) nach Anspruch 11-12, wobei sich das Verriegelungsmittel (42) zwischen dem ersten und dem zweiten Sekundärelement (20, 20') innerhalb des Primärelements (10) befindet.

14. Profilsystem (4) nach Anspruch 11-12, wobei sich das Verriegelungsmittel (42) zwischen dem ersten und dem zweiten Sekundärelement (20, 20') außerhalb des Primärelements (10) befindet.

15. Profilsystem (4) nach Anspruch 6 bis 14, wobei das zweite Sekundärprofil (2') einen Querschnitt aufweist, der dem des zweiten Sekundärelements (20') gleich ist.

16. Montageverfahren für ein Profilsystem (4), das die folgenden Schritte umfasst:

i. Eintritt des ersten Sekundärelements (20) durch Einführen des Endes des ersten Sekundärelements (20) durch den Durchgangsschlitz (14) der Perforation (12) des Primärelements (10) des mindestens einen Primärprofils (1);
ii. Ausrichten der mindestens einen Nut (24) oder Ausformung des ersten Sekundärelements (20) mit dem mindestens einen Verriegelungsflansch (16) des Primärelements (10) des mindestens einen Primärprofils (1); und
iii. Zusammenfügen des Primärprofils (1) mit dem ersten Sekundärprofil (2) durch Bewegen des ersten Sekundärelements (20) von dem Durchgangsschlitz (14) zu dem Verriegelungsschlitz (13), wobei gleichzeitig der Verriegelungsflansch (16) des Primärelements (10) in die Nut (24) des ersten Sekundärelements (20) eingeführt wird.

17. Montageverfahren für ein Profilsystem (4) nach Anspruch 16, wobei die Bewegung vom Durchgangsschlitz (14) zum Verriegelungsschlitz (13) eine sequentielle Bewegung ist, die durch Drehen des ersten Sekundärelements (20) ausgeführt wird.

18. Montageverfahren für ein Profilsystem (4) nach Anspruch 16, wobei ein zweites Sekundärelement (20') mit dem ersten Sekundärelement (20) nach Schritt i) des Eintritts des ersten Sekundärelements (20) und vor Schritt ii) der Ausrichtung auf das Primärelement (10) gekoppelt wird.

19. Montageverfahren für ein Profilsystem (4) nach Anspruch 16, wobei ein zweites Sekundärelement (20') mit dem ersten Sekundärelement (20) nach Schritt iii) des Verbindens des Primärprofils (1) mit dem ersten Sekundärprofil (2) durch vorheriges Kippen des Primärflügels (15) des Primärelements (10) gekoppelt wird.

**Revendications**

1. Système de profilé (4) pour une structure destinée à être utilisée dans la construction, configuré pour assembler au moins un profilé primaire (1) avec au moins un premier profilé secondaire (2), le système de profilé (4) comprenant

un élément primaire (10), disposé dans ledit au moins un profilé primaire (1), comprenant

a) au moins une âme primaire (11), dans laquelle chaque âme primaire (11) comprend au moins une perforation (12) avec au moins une saillie de transition (17) configurée pour séparer une fente de verrouillage (13) et une fente de passage (14) définissant respectivement une position de verrouillage et une position de coulissement, et
b) au moins une aile primaire (15)

dans lequel l'âme primaire (11) et/ou l'aile primaire (15) comprend au moins une bride de verrouillage (16) ;
un premier élément secondaire (20), disposé dans ledit au moins un premier profilé secondaire (2), comprenant

a) au moins une âme secondaire (21),
b) au moins une aile secondaire (22), et

c) au moins une rainure (24) ou une conformation adaptable à ladite au moins une bride de verrouillage (16) disposée dans l'âme primaire (11) et/ou l'aile primaire (15) de l'élément primaire (10), dudit au moins un profilé primaire (1) ;

dans lequel ledit premier élément secondaire (20) présente une section transversale configurée pour pénétrer dans la fente de passage (14) de la perforation (12) de ladite au moins une âme primaire (11) de l'élément primaire (10) dudit au moins un profilé primaire (1) ; et
ledit premier élément secondaire (20) est configuré pour basculer de la fente de passage (14) vers la fente de verrouillage (13), une fois en utilisation, la rainure (24) ou la conformation du premier élément secondaire (20) étant alignée sur ladite au moins une bride de verrouillage (16) de l'élément primaire (10).

2. Système de profilé (4) selon la revendication 1, dans lequel le premier élément secondaire (20) comprend deux rainures (24) ou deux conformations configurées pour être pénétrées respectivement par une bride de verrouillage (16) disposée dans une première âme primaire (11) et dans une deuxième âme primaire (11') ou l'aile primaire (15) de l'élément primaire (10).

3. Système de profilé (4) selon les revendications 1 à 2, dans lequel le premier profilé secondaire (2) présente une section transversale égale à celle du premier élément secondaire (20).

4. Système de profilé (4) selon les revendications 1 à 3, dans lequel le premier élément secondaire (20) présente une section transversale en forme de C avec les languettes (23) orientées vers l'intérieur.

5. Système de profilé (4) selon les revendications 1 à 3, dans lequel le premier élément secondaire (20) présente une section transversale en forme d'oméga avec les brides (23) orientées vers l'extérieur.

6. Système de profilé (4) selon les revendications 1 à 5, dans lequel le système de profilé (4) comprend en outre un deuxième élément secondaire (20'), disposé dans un deuxième profilé secondaire (2'), qui comprend au moins une âme secondaire (21') et au moins une aile secondaire (22'), dans lequel le deuxième élément secondaire (20') comprend une extrémité longitudinale (25') présentant une configuration emboîtable avec l'extrémité longitudinale (25) du premier élément secondaire (20).

7. Système de profilé (4) selon la revendication 6, dans lequel le deuxième élément secondaire (20') présente une rainure (24') ou une conformation disposée dans l'âme secondaire (21') et/ou l'aile secondaire (22') qui, en utilisation, est pénétrable par la bride de verrouillage (16) de l'élément primaire (10).

8. Système de profilé (4) selon la revendication 6, dans lequel le deuxième élément secondaire (20') comprend deux rainures (24') ou deux formes pénétrables respectivement par deux brides de verrouillage (16) disposées dans une première âme primaire (11) et dans une deuxième âme primaire (11') ou l'aile primaire (15) de l'élément primaire (10).

9. Système de profilé (4) selon les revendications 6 à 8, dans lequel le premier élément secondaire (20) comprend un rétrécissement à son extrémité, insérable dans l'extrémité du deuxième élément secondaire (20').

10. Système de profilé (4) selon les revendications 6 à 8, dans lequel le deuxième élément secondaire (20') comprend un rétrécissement à son extrémité, insérable dans l'extrémité du premier élément secondaire (20).

11. Système de profilé (4) selon les revendications 6 à 10, dans lequel les premier et deuxième éléments secondaires (20, 20') comprennent des moyens de verrouillage (42) configurés pour fixer le couplage longitudinal entre lesdits éléments secondaires (20, 20').

12. Système de profilé (4) selon la revendication 11, dans lequel les moyens de verrouillage (42) sont un assemblage à rainure et languette.

13. Système de profilé (4) selon les revendications 11 à 12, dans lequel les moyens de verrouillage (42) entre le premier et le deuxième élément secondaire (20, 20') sont disposés à l'intérieur de l'élément primaire (10).

14. Système de profilé (4) selon les revendications 11 à 12, dans lequel les moyens de verrouillage (42) entre le premier et le deuxième élément secondaire (20, 20') sont disposés à l'extérieur de l'élément primaire (10).

15. Système de profilé (4) selon les revendications 6 à 14, dans lequel le deuxième profilé secondaire (2') présente une section transversale égale à celle du deuxième élément secondaire (20').

16. Procédé d'installation d'un système de profilé (4) comprenant les étapes suivantes :

i. entrée du premier élément secondaire (20) par insertion de l'extrémité du premier élément secondaire (20) à travers la fente de passage (14) de la perforation (12) de l'élément primaire (10) dudit au moins un profilé primaire (1) ;

ii. alignement de ladite au moins une rainure (24) ou conformation du premier élément secondaire (20) avec ladite au moins une bride de verrouillage (16) de l'élément primaire (10) dudit au moins un profilé primaire (1) ; et

iii. assemblage du profilé primaire (1) avec le premier profilé secondaire (2) en déplaçant le premier élément secondaire (20) de la fente de passage (14) vers la fente de verrouillage (13), en introduisant simultanément la bride de verrouillage (16) de l'élément primaire (10) dans la rainure (24) du premier élément secondaire (20).

**17.** Procédé d'installation d'un système de profilé (4) selon la revendication 16, dans lequel le déplacement de la fente de passage (14) vers la fente de verrouillage (13) est un déplacement séquentiel, réalisé par rotation du premier élément secondaire (20).

**18.** Procédé d'installation d'un système de profilé (4) selon la revendication 16, dans lequel un deuxième élément secondaire (20') est couplé au premier élément secondaire (20) après l'étape i) d'entrée du premier élément secondaire (20) et avant l'étape ii) d'alignement avec l'élément primaire (10).

**19.** Procédé d'installation d'un système de profilé (4) selon la revendication 16, dans lequel un deuxième élément secondaire (20') est couplé au premier élément secondaire (20) après l'étape iii) d'assemblage du profilé primaire (1) avec le premier profilé secondaire (2) par basculement préalable de l'aile primaire (15) de l'élément primaire (10).

FIG. 1

FIG. 2

EP 4 493 773 B1

FIG. 3a

FIG. 3b

FIG. 4a

FIG. 4b

D

10

20´

42

41

FIG. 5a

D

10

20

20´

42

41

FIG. 5b

FIG. 6a

FIG. 6b

FIG. 6c

FIG. 6d

24

FIG. 7

FIG. 8a

FIG. 8b

FIG. 8c

FIG. 8d

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1134329 A1
- US 4208851 A
- ES 2240586 T3
- ES 2056916 T3
- EP 1724407 B1